# EUROPÄISCHE PATENTSCHRIFT

(11) **EP 2 746 105 B1**
(45) Veröffentlichungstag und Bekanntmachung des Hinweises auf die Patenterteilung: **17.08.2022**
(21) Anmeldenummer: 13005898.5
(22) Anmeldetag: 18.12.2013
(51) Int. Cl.: B60Q 1/24, E02F 3/96, E02F 9/08, E02F 9/26

(54) **Arbeitsmaschine**
Work machine
Machine de travail

(30) Priorität: 18.12.2012 DE 102012024726
(43) Veröffentlichungstag der Anmeldung: 25.06.2014
(73) Patentinhaber: Liebherr-Werk Bischofshofen GmbH, 5500 Bischofshofen (AT)
(72) Erfinder: Bös, Manuel, 5400 Hallein (AT); Eder, Marco, 5700 Zell am See (AT); Esche, Thomas, 89081 Ulm (DE)
(74) Vertreter: Herrmann, Uwe

(56) Entgegenhaltungen:
- EP-A1- 2 158 799
- EP-A2- 2 402 213
- DE-A1- 10 055 264
- DE-U1- 29 710 645
- DE-U1-202004 004 805

## Beschreibung

Die vorliegende Erfindung betrifft eine Arbeitsmaschine mit wenigstens einer beweglich angeordneten Arbeitsausrüstung und mit mehreren Beleuchtungsmitteln zur Beleuchtung des Arbeitsbereiches der Arbeitsausrüstung, wobei die Arbeitsmaschine wenigstens eine Steuereinheit sowie wenigstens eine Erfassungseinheit zur Erfassung der Position wenigstens eines Teils von wenigstens zwei relativ zueinander beweglichen Teilen der Arbeitsmaschine und/oder zur Erfassung des Lenkwinkels der Arbeitsmaschine aufweist, wobei die Steuereinheit derart mit der Erfassungseinheit in Verbindung steht, dass von der Erfassungseinheit erfaßte Positionsdaten an die Steuereinheit übermittelt werden.

Vorteilhafter Weise können Positionsdaten für die Beleuchtungssteuerung aus einer bereits vorhandenen Positionserfassung der Arbeitsausrüstung herangezogen werden, wobei die Positionserfassung der Arbeitsausrüstung primär zur Steuerung der Arbeitshydraulik genutzt wird, und diese Positionserfassung dem Stand der Technik entspricht. Die Positionserfassung kann dabei direkt durch Zylinderlängemessung, oder indirekt, durch Gelenkwinkelmessung an der Arbeitsausrüstung erfolgen.

Aus dem Stand der Technik bekannte Arbeitsmaschinen sind üblicherweise mit unterschiedlichsten Scheinwerferoptionen ausgeführt, um die Umgebung und damit das Arbeitsumfeld des Werkzeuges, wie beispielsweise einer Schaufel auszuleuchten.

Die bei Arbeitsmaschinen verwendeten Beleuchtungsmittel können unterschieden werden in die sogenannten Fahrscheinwerfer, die insbesondere im Fahrbetrieb der Arbeitsmaschine verwendet werden und in Arbeitsscheinwerfer, die üblicherweise nur abseits des öffentlichen Straßenverkehrs aktiviert werden und zur Ausleuchtung des Arbeitsbereiches im allgemeinen eine besonders hohe Helligkeit aufweisen.

Um eine möglichst gute Ausleuchtung der Umgebung bzw. des Arbeitsbereiches der Arbeitsausrüstung zu gewährleisten, sind Arbeitsscheinwerfer häufig in größerer Höhe oder anderen Positionen mit freiem Blickfeld am Fahrzeug bzw. an der Arbeitsmaschine montiert und gegebenenfalls in Gruppen von Scheinwerfern angeordnet, die nach vorne und nach hinten gerichtet sind.

Mobile Arbeitsmaschinen üben zusätzlich zur reinen Fahrfunktion mittels ihrer beweglich angeordneten Arbeitsausrüstung noch mindestens eine Arbeitsfunktion aus. Im Falle eines Radladers wird die Arbeitsausrüstung beispielsweise durch ein üblicherweise an der Front montiertes Hubgerüst gebildet, an dem ein Werkzeug, wie z. B. eine Schaufel oder eine Gabel angeordnet ist.

Bei dem Begriff der "Arbeitsausrüstung" kann es sich im Rahmen der vorliegenden Erfindung beispielsweise um ein Hubgerüst oder Ausleger oder dergleichen und/oder um ein daran angeordnetes Werkzeug, wie beispielsweise eine Schaufel, Gabel, etc. handeln, das in dem Arbeitsbereich seine Funktion erfüllt, wie z.B. einen Grabprozess, einen Beladungsvorgang, eine Transportfunktion etc. Die "Beleuchtungsmittel" der vorliegenden Erfindung werden vorzugsweise durch die oben genannten Arbeitsscheinwerfer gebildet. Alternativ oder zusätzlich können diese auch sofern vorhanden durch Fahrscheinwerfer der Arbeitsmaschine gebildet werden.

Aufgrund der Bewegbarkeit der Arbeitsausrüstung kann es dazu kommen, dass sich aus Sicht des Maschinenführers eine positionsveränderliche, direkte Sichtbehinderung ergibt, was mit anderen Worten bedeutet, dass sich die Arbeitsausrüstung zumindest partiell zwischen dem eigentlichen Arbeitsbereich und dem Maschinenführer befindet, so dass dieser nicht ungehindert den Arbeitsbereich einsehen kann. Handelt es sich bei der Arbeitsmaschine beispielsweise um einen Radlader, kann es dazu kommen, dass sich die Arbeitsausrüstung zwischen dem Maschinenführer und dem Arbeitsbereich befindet, so dass sich für den Maschinenführer eine Sichtbehinderung ergibt. Diese ist insbesondere dann störend, wenn in einer dunklen Umgebung zusätzlich die Scheinwerfer der Arbeitsmaschine zum Einsatz kommen. Dabei kann die genannte Sichtbehinderung noch beispielsweise durch Schattenwürfe im Hintergrund der Arbeitsausrüstung und Blendeffekte der Arbeitsausrüstung im Vordergrund in Richtung des Maschinenführers verstärkt werden.

So ist es beispielsweise denkbar, dass die Beleuchtungsmittel die Arbeitsausrüstung, wie beispielsweise eine angehobene Schaufel anleuchten, was zur Folge hat, dass der Maschinenführer mit einem vergleichsweise hellen Vordergrund und mit einem vergleichsweise dunklem Hintergrund bzw. dunklen Arbeitsbereich konfrontiert ist, der für die Betrachtung jedoch gerade relevant ist. Denn im Arbeitsbereich befinden sich üblicherweise Bearbeitungsziele, wie Materialanhäufungen, die Bordwand eines beladenen LKWs oder dergleichen.

Aus dem Stand der Technik sind Arbeitsmaschinen mit beweglich angeordneten bzw. verstellbaren Arbeitsleuchten bekannt. So offenbart die DE 10 2007 013 810 A1 eine Arbeitsmaschine mit Scheinwerfern, die zum Zwecke der ausreichenden Ausleuchtung unabhängig voneinander schwenkbar sind. Die DE 10 2009 039 324 A1 offenbart eine Arbeitsmaschine mit beweglich ausgeführten Arbeitsscheinwerfern. Gemäß dieser Patentanmeldung ist vorgesehen, dass die Scheinwerfer derart eingestellt werden, dass die Ausbreitung des von diesen ausgehenden Lichtstrahls in der Vertikalen von der Fahrgeschwindigkeit der Arbeitsmaschine abhängig ist. Die DE 10 2010 030 649 A1 offenbart schließlich eine Arbeitsmaschine, die verstellbare Beleuchtungsmittel aufweist. Vorgesehen ist, dass die Ausrichtung und/oder der Öffnungswinkel des Leuchtkegels der Beleuchtungsmittel einstellbar ist und zwar in Abhängigkeit der Eigenschaften des Arbeitsgerätes. Damit soll die Aufgabe gelöst werden, die Beleuchtungseinrichtung optimal auf das jeweilige Arbeitsgerät ausrichten zu können.

Aus der DE 100 55 264 A1 ist ein Flurförderzeug mit einer Hubvorrichtung und mindestens einem Arbeitsscheinwerfer zur Ausleuchtung des Arbeitsbereiches der Hubvorrichtung bekannt, wobei der Arbeitsscheinwerfer verstellbar befestigt ist und die Verstellung des Arbeitsscheinwerfers abhängig von der Hubhöhe der Hubvorrichtung erfolgt.

Aus der DE 297 10 645 U1 ist ein Gabelstapler mit vier an einem Fahrgestell gelagerten Rädern und einem in der Transportstellung umlegbaren, die Gabeln tragenden Portal bekannt. Das Fahrgestellt des Gabelstaplers weist zwei Teile auf welche um eine horizontale Querachse gegeneinander verschwenkbar sind. Auf eine Beleuchtungseinrichtung wird in dieser Druckschrift nicht eingegangen.

Die EP 2 158 799 A1 offenbart eine selbstfahrende landwirtschaftliche Arbeitsmaschine mit wenigstens einem aktiven und/oder passiven optischem Element, wobei das wenigstens eine optische Element mittels wenigstens einer signalverarbeitenden Einheit in Abhängigkeit von den Arbeitsbedingungen der landwirtschaftlichen Arbeitsmaschine automatisch steuerbar ist. Das optische Element wird mittels einer Eingabeeinheit zu einzelnen Betriebsbedingungen der Arbeitsmaschine zugeordnet. Eine veränderliche Lichtintensität einer Arbeitsbeleuchtung geht aus dieser Druckschrift nicht hervor.

Die DE 20 2004 004 805 U1 offenbart einen Mobilkran mit Scheinwerfern und/oder Kamera wobei mindestens ein Scheinwerfer und/oder mindestens eine Kamera an einer Stelle des Mobilkrans mittels eines zugeordneten Aktuators verstellbar ist. Auf die Variabilität der Lichtintensität des Scheinwerfers wird in dieser Entgegenhaltung nicht eingegangen.

Die EP 2 402 213 A2 offenbart eine Anordnung zur Kontrolle der Arbeitsgerätebeleuchtung eines Arbeitsfahrzeugs, bei der eine Steuereinrichtung mit einem Aktuator zur Verstellung der Ausrichtung und/oder des Öffnungswinkels des Leuchtkegels der Arbeitsgerätebeleuchtungseinrichtung vorgesehen ist. Wie die vorgenannte Druckschrift so geht auch diese Druckschrift nicht auf die Variabilität einer Lichtintensität der Arbeitsgerätebeleuchtungseinrichtung ein.

Die bekannten Arbeitsmaschinen sind darauf ausgerichtet, die Arbeitsausrüstung und vorrangig den Arbeitsbereich zu beleuchten, lösen jedoch nicht das eingangs genannte Problem der in dunklen Umgebungen durch die Beleuchtung verstärkten Sichtbehinderung des Maschinenführers durch die Arbeitsausrüstung. Der vorliegenden Erfindung liegt daher die Aufgabe zugrunde, eine Arbeitsmaschine der eingangs genannten Art dahingehend weiterzubilden, dass sichergestellt ist, dass der Arbeitsbereich für den Maschinenführer möglichst gut einsehbar ist.

Diese Aufgabe wird durch eine Arbeitsmaschine mit den Merkmalen des Anspruchs 1 gelöst. Danach ist vorgesehen, dass die Steuereinheit die Beleuchtungsmittel derart ansteuert, dass die Steuereinheit in Abhängigkeit der von den Erfassungsmitteln erhaltenen Positionsdaten die Beleuchtungsintensität der durch die Beleuchtungsmittel in wenigstens einer Richtung abgegebenen Beleuchtung derart einstellt, dass sie Beleuchtungsmittel, in deren Beleuchtungsrichtung sich das Teil von wenigstens zwei relativ zueinander beweglichen Teilen der Arbeitsmaschine befindet, mit einer geringeren Beleuchtungsintensität betreibt, als Beleuchtungsmittel, in deren Beleuchtungsrichtung sich das Teil nicht befindet. Darunter ist auch der Fall zu verstehen, dass die Beleuchtungsmittel, in deren Beleuchtungsrichtung sich ein kleinerer Bereich des fraglichen Teils befindet mit einer größeren Beleuchtungsintensität betrieben werden, als die Beleuchtungsmittel, in deren Beleuchtungsrichtung sich ein relativ dazu größerer Bereich des fraglichen Teils befindet.

Erfindungsgemäß steht die Steuereinheit mit den Beleuchtungsmitteln derart in Verbindung und ist so ausgeführt, dass die Steuereinheit in Abhängigkeit der von den Erfassungsmitteln erhaltenen Positionsdaten die Beleuchtungsintensität der durch die Beleuchtungsmittel abgegebenen Beleuchtung einstellt. So ist es möglich, dass beispielsweise ein Scheinwerfer oder ein sonstiges Beleuchtungsmittel, der für den Maschinenführer zu einer Blendwirkung führen würde, da dessen Lichtstrahl von der Arbeitsausrüstung reflektiert wird bzw. würde mit geringerer Beleuchtungsintensität betrieben wird als ein Beleuchtungsmittel, bei dem mit einer solchen Blendwirkung nicht zu rechnen ist, das heißt dass ungehindert Licht in den Arbeitsbereich abgeben kann.

Durch die Erfindung ist es möglich, dass der Raum zwischen dem Beleuchtungsmittel und der Arbeitsausrüstung nicht bzw. schwächer beleuchtet wird, als der Hintergrund, das heißt als der Arbeitsbereich. Diese Ausgestaltung der Erfindung führt dazu, dass im Hinblick auf die Beleuchtung aus Sicht des Maschinenführers nicht das Arbeitsgerät selbst im Vordergrund steht, sondern der Arbeitsbereich, wie beispielsweise eine Materialanhäufung oder die Bordwand eines zu beladenen LKWs, etc.

Durch die vorliegende Erfindung wird eine intelligente Ansteuerung wenigstens eines, vorzugsweise verschiedenster Scheinwerfer oder sonstiger Beleuchtungsmittel realisiert, mit dem Ziel, das Arbeitsumfeld bzw. den Arbeitsbereich immer optimal auszuleuchten, ohne den Maschinenführer zu blenden oder störende Schattenwürfe zuzulassen. Hierzu werden der oder die Scheinwerfer in Abhängigkeit der Position der Arbeitsausrüstung oder anderer beweglicher Teile wie beschrieben angesteuert.

Durch die vorliegende Erfindung ist es möglich aus Sicht des Maschinenführers vorrangig den Hintergrund hinter dem Arbeitswerkzeug zu beleuchten und den Vordergrund, das heißt das Arbeitsgerät selbst vorrangig dunkel zu halten. Schattenwürfe und Blendeffekte, die den Maschinenführer bei seiner Tätigkeit stören könnten, werden dadurch minimiert.

Besonders bevorzugt ist es, wenn die Arbeitsmaschine mehrere, voneinander beabstandet angeordnete Beleuchtungsmittel aufweist und die Steuereinheit derart ausgebildet ist, dass diese die Beleuchtungsintensität der von den mehreren Beleuchtungsmitteln abgegebenen Beleuchtung in Abhängigkeit der von den Erfassungsmitteln erhaltenen Positionsdaten einstellt. So ist es denkbar, dass ein Scheinwerfer oder ein sonstiges Beleuchtungsmittel in dessen Lichtstrahl sich die Arbeitsausrüstung oder ein Teil von dieser befindet mit geringerer Intensität betrieben wird als ein Scheinwerfer bzw. als ein Beleuchtungsmittel, dessen Lichtstrahl ungehindert, das heißt ohne auf die Arbeitsausrüstung zu treffen, den Arbeitsbereich beleuchtet.

Gemäß der Erfindung sind die Beleuchtungsmittel, die insbesondere als Scheinwerfer ausgeführt sein können, dimmbar oder stufenlos dimmbar. Unter der Einstellung der Beleuchtungsintensität ist jedoch auch der Fall zu verstehen, dass die Beleuchtungsmittel bzw. die Scheinwerfer ein- und ausgeschaltet werden können. Dies führt allerdings zu Einbußen im Sichtkomfort.

Unter der Veränderung der Beleuchtungsintensität ist jede beliebige Maßnahme zu verstehen, mit der die von einem Scheinwerfer ausgehende Beleuchtungsintensität in wenigstens einer Raumrichtung verändert werden kann. Dazu gehört beispielsweise das Abschalten, Einschalten, Dimmen, Vorschalten oder Wegbewegen einer Blende oder eines Filters, die Bewegung der Scheinwerfer etc.

Wie ausgeführt, können in Abhängigkeit der Position des Arbeitsgerätes der oder die vorhandenen Scheinwerfer bzw. sonstigen Beleuchtungsmitteln nun so angesteuert werden, dass aus Sicht eines Maschinenführers der Raum zwischen Scheinwerfer und Arbeitsausrüstung, wie beispielsweise Hubgerüst, Frontlader, Ausleger, Kranarm etc. nicht bzw. nur schwach beleuchtet wird, wohingegen der Hintergrund, das heißt der eigentliche Arbeitsbereich, in dem das Gerät die Arbeit zu verrichten hat, heller erleuchtet wird.

Um dieses Ziel zu erreichen, kann es notwendig sein, zusätzliche Scheinwerfer zu einem Aufbau gemäß der im Stand der Technik hinzuzufügen. Sind diese beispielsweise in einer unteren Stellung der Arbeitsausrüstung verdeckt, wird der Arbeitsbereich durch relativ dazu weiter oben angeordnete Scheinwerfer ausgeleuchtet, deren Lichtkegel durch die Arbeitsausrüstung nicht oder nur in geringerem Umfang beeinträchtigt wird. Wird die Arbeitsausrüstung angehoben, wie dies beispielsweise bei einem Radlader möglich ist, werden die zusätzlichen, weiter unten angebrachten Scheinwerfer z. B. stufenlos aktiviert bzw. eingeschaltet und gleichzeitig oder zeitlich versetzt die oberen Scheinwerfer z. B. stufenlos deaktiviert bzw. ausgeschaltet. In diesem Fall erfolgt die Beleuchtung des Arbeitsbereiches ausschließlich oder vorwiegend mit den weiter unten angebrachten Scheinwerfern.

Die Scheinwerfer, in deren Lichtstrahl sich die Arbeitsausrüstung oder ein Teil von dieser befindet, können ganz abgeschaltet werden oder auch mit geringerer Helligkeit betrieben werden, vorzugsweise derart, dass keine Blendwirkung für den Maschinenführer eintritt. Beide Varianten, d.h. die Verstellung der Lichtleistung durch Dimmen sowie das Ein- und Ausschalten sind von der Erfindung umfaßt.

Die Scheinwerfer bzw. Beleuchtungsmittel, bei denen die Blendwirkung nicht eintreten kann bzw. in deren Lichtkegel die Arbeitsausrüstung nicht oder in geringerem Umfang sich befindet, können mit maximaler Leuchtkraft betrieben werden.

Die Verstellung der Beleuchtungsintensität kann beispielsweise durch Veränderung der abgegebenen Lichtleistung und/oder durch eine Veränderung der Beleuchtungsrichtung herbeigeführt werden. In zweiten Fall sind die Beleuchtungsmittel in ihrer Position verstellbar, z.B. drehbar oder schwenkbar angeordnet. Befindet sich die Arbeitsausrüstung aus Sicht des Maschinenführers beispielsweise in dem Beleuchtungsbereich eines Scheinwerfers kann die Blendwirkung durch Ausschalten oder Herabdimmen des Scheinwerfers oder auch durch ein Verschwenken des Scheinwerfers derart verhindert werden, dass dieser nicht mehr oder nur noch in verringertem Umfang die Arbeitsausrüstung beleuchtet.

Vorzugsweise ist vorgesehen, dass die Beleuchtungsmittel ortsfest, d. h. nicht beweglich angeordnet sind, und dass eine Veränderung der Beleuchtungsrichtung somit nicht möglich ist.

Die Arbeitsausrüstung kann derart ausgebildet sein, dass diese auf und ab bewegbar ist, wie beispielsweise das Hubgerät und die Schaufel eines Radladers oder auch in seitlicher Richtung bewegbar ist. Die vorliegende Erfindung ist selbstverständlich nicht auf Radlader beschränkt, sondern kann beispielsweise auch Gabelstapler, Krane, Bagger, Teleskop- oder Skid-Stear-Lader, Traktoren mit Frontladern, Materialumschlagsgeräte, Kranfahrzeuge, etc. umfassen.

Die vorliegende Arbeitsmaschine kann beispielsweise ortsfest oder auch mobil sein.

Bei der Position des fraglichen Teils kann es sich vorzugsweise um die Position der Arbeitsausrüstung oder eines Elementes von dieser handeln. Diese kann aus einem Hubgerüst, Frontlader, Ausleger, Kranarm, etc. und einem daran angeordneten Werkzeug bestehen.

Die vorliegende Erfindung ist nicht auf die Auf- und Abwärtsbewegung einer Arbeitsausrüstung beschränkt, sondern kann auf jegliche zueinander bewegliche Teile angewendet werden, bei deren Bewegung für den Maschinenführer Einschränkungen einer Umgebungsausleuchtung auftreten, z. B. durch Blendeffekte oder Schattenwürfe.

Im Falle eines knickgelenkten Fahrzeuges könnten z. B. Scheinwerfer rechts und links von der Mittelebene je nach Knickwinkel entsprechend herauf- oder heruntergeregelt oder verschwenkt etc. werden, um Blendeffekte und Schattenwürfe zu vermeiden. In diesem Fall ist das bewegliche Teil nicht zwingender Weise die Arbeitsausrüstung selbst, sondern ein durch die Knicklenkung bewegter Teil der Arbeitsmaschine.

Die Ansteuerung kann durch eine Maschinensteuerung basierend auf diversen Eingangssignalen erfolgen. Diese Eingangssignale können von einem oder mehreren Sensoren stammen, die die Position der Arbeitsausrüstung und/oder des Lenkwinkels der Arbeitsmaschine und/oder anderer beweglicher Teile der Arbeitsmaschine zurückmelden. In Abhängigkeit davon kann die Beleuchtung erfindungsgemäß gesteuert werden.

An dieser Stelle wird darauf hingewiesen, dass der Begriff des "Steuerns" das einfache Steuern sowie auch eine Regelung der Beleuchtung umfasst.

Gemäß der Erfindung ist vorgesehen, dass mehrere Scheinwerfer eines mobilen Arbeitsfahrzeuges derart angesteuert werden, dass Blendeffekte und Schattenwürfe minimiert werden, indem die Scheinwerfer in Abhängigkeit von der Position von beweglichen Teilen, wie des Arbeitsgerätes mit geringerer bzw. höherer Lichtleistung betrieben werden. In einer bevorzugten Ausgestaltung der Erfindung werden einzelne Scheinwerfer ganz abgeschaltet bzw. eingeschaltet.

Gemäß der Erfindung werden die Helligkeiten in der Weise geregelt bzw. gesteuert, dass diejenigen Scheinwerfer, die freie "Sicht" auf die Umgebung bzw. den Arbeitsbereich haben (d.h. bei denen sich zwischen Scheinwerfer und Arbeitsbereich kein oder ein vergleichsweise geringer Bereich der Arbeitsausrüstung oder eines sonstigen Teils befindet), mit höchster bzw. höherer Helligkeit betrieben werden, wobei Scheinwerfer, die vorrangig Komponenten des eigenen Trägerfahrzeugs anstrahlen, heruntergeregelt werden. Dies gilt insbesondere in Situationen, in denen ansonsten störende Schattenwürfe oder Blendeffekte auftreten würden, die den Maschinenführer behindern.

In einer bevorzugten Ausgestaltung der Erfindung ist vorgesehen, dass die Arbeitsmaschine Erfassungsmittel aufweist, mittels derer die Art der Kinematik (z. B. Z-Kinematik etc.) und/oder des Werkzeugs und/oder des Hubgerüstes und/oder insgesamt der Arbeitsausrüstung erfasst wird.

Dabei ist es denkbar, dass die Steuereinheit die Beleuchtungsmittel entsprechend des von den Erfassungsmitteln erhaltenen Signals ansteuert. So ist es beispielsweise möglich, dass in der Steuereinheit oder in einem sonstigen Speicher hinterlegt ist, wie die Ansteuerung der Beleuchtungsmittel zu erfolgen hat, und zwar in Abhängigkeit z. B. von der Art des Hubgerüstes, des Arbeitswerkzeuges, der Kinematik etc.. So ist es beispielsweise denkbar, dass die Intensität eines Scheinwerfers bei Erreichen eines bestimmten Winkels des Hubgerätes geändert wird, dieser bestimmte Winkel jedoch von der Art des Werkzeuges abhängt. Grundsätzlich können somit z. B. in Abhängigkeit des Arbeitswerkzeuges unterschiedliche Ansteuerungen der Beleuchtung hinterlegt sein, die dann von der Steuereinheit entsprechend umgesetzt werden.

Die Mitteilung, welches Hubgerüst etc. verwendet wird, kann beispielsweise über eine RFID-Verbindung oder über eine sonstige Schnittstelle mitgeteilt werden.

In bevorzugter Ausgestaltung der Erfindung ist vorgesehen, dass die Erfassungseinheit zur Erfassung der Position wenigstens eines Teils von wenigstens zwei relativ zueinander beweglichen Teilen der Arbeitsmaschine und/oder zur Erfassung des Lenkwinkels der Arbeitsmaschine mit wenigstens einem Speicher in Verbindung steht, in dem wenigstens ein Kennfeld oder wenigstens eine Tabelle gespeichert ist, in dem/der die Abhängigkeit der Beleuchtungsintensität von einem oder von mehreren durch die Erfassungseinheit erfassten Parametern wiedergegeben ist und dass Mittel vorgesehen sind, durch die die anhand des Kennfeldes oder der Tabelle ermittelte Beleuchtungsintensität ausgegeben wird.

Weiterhin ist es denkbar, dass es sich bei dem oder den Parametern um den Knickwinkel und/oder um den Hubwinkel der Arbeitsausrüstung insbesondere eines Radladers handelt.

In einer weiteren Ausgestaltung der Erfindung ist vorgesehen, dass mehrere Scheinwerfer vorhanden sind und dass die Kennfelder oder Tabellen und/oder die Art und/oder die Anzahl der Parameter für die mehreren Scheinwerfer unterschiedlich sind. So ist es beispielsweise möglich, dass die Beleuchtungsintensität für einen oben angeordneten Scheinwerfer vom Hubwinkel und vom Knickwinkel der Arbeitsausrüstung abhängt, die Beleuchtungsintensität eines unten angeordneten Scheinwerfers aber nur vom Hubwinkel der Arbeitsausrüstung.

Die vorliegende Erfindung betrifft des Weiteren ein Verfahren zum Betrieb einer Arbeitsmaschine, bei dem in Abhängigkeit der von den Erfassungsmitteln erhaltenen Positionsdaten die Beleuchtungsintensität der durch die Beleuchtungsmittel in wenigstens einer Richtung abgegebenen Beleuchtung derart eingestellt wird, dass Beleuchtungsmittel, in deren Beleuchtungsrichtung sich das Teil von wenigstens zwei relativ zueinander beweglichen Teilen der Arbeitsmaschine befindet, mit einer geringeren Beleuchtungsintensität betrieben werden, als Beleuchtungsmittel, in deren Beleuchtungsrichtung sich das Teil nicht befindet.

Denkbar ist es, dass zur Ermittlung der Beleuchtungsintensität wenigstens ein Kennfeld oder wenigstens eine Tabelle verwendet wird, in dem/der die Beleuchtungsintensität in Abhängigkeit wenigstens eines gemessenen Parameters, insbesondere in Abhängigkeit des Knickwinkels und/oder des Hubwinkels der Arbeitsausrüstung insbesondere eines Radladers abgespeichert ist.

Das erfindungsgemäße Verfahren ist in bevorzugter Ausgestaltung des weiteren gemäß einem der Ansprüche 1 bis 13 ausgeführt.

Weitere Einzelheiten und Vorteile werden anhand eines in der Zeichnung dargestellten Ausführungsbeispiels näher erläutert. Es zeigen:
- Figur 1:: eine schematische Ansicht eines Radladers mit abgesenkter Arbeitsausrüstung und mit wenigstens zwei in vertikaler Richtung voneinander beabstandeten Scheinwerfern und Ausleuchtung vorrangig durch den oberen Scheinwerfer,
- Figur 2:: eine schematische Ansicht eines Radladers gemäß Figur 1 mit angehobener Arbeitsausrüstung und Ausleuchtung vorrangig durch den oberen Scheinwerfer,
- Figur 3:: eine schematische Ansicht eines Radladers mit angehobener Arbeitsausrüstung und mit wenigstens zwei in vertikaler Richtung voneinander beabstandeten Scheinwerfern und Ausleuchtung vorrangig durch den unteren Scheinwerfer,
- Figur 4:: eine schematische Draufsicht auf einen Radlader gemäß der Figuren 1 bis 3,
- Figur 5:: eine Ansicht auf das Arbeitswerkzeug aus Sicht des Maschinenführers,
- Figur 6:: eine Ansicht des Verfahrens zur Steuerung/Regelung einer Beleuchtung,
- Figur 7:: eine Ansicht einer speziellen Ausführung eines Verfahrens zur Steuerung/Regelung einer Beleuchtung,
- Figur 8:: eine Ansicht einer vorteilhaften Ausführung eines Kennfeldes zur Beleuchtungssteuerung und
- Figur 9:: eine Ansicht einer vorteilhaften Ausführung eines Kennfeldes zur Beleuchtungssteuerung.

Das Bezugszeichen 20 kennzeichnet einen zweiten Scheinwerfer, der sich horizontal und/oder vertikal versetzt in Bezug auf den ersten Scheinwerfer 10 befindet und vorzugsweise in etwa auf der Höhe der Oberkante der Vorderräder angeordnet ist.

Mit dem Bezugszeichen 30 ist die Arbeitsausrüstung gekennzeichnet, das aus einem Hubgerüst 32 und dem eigentlichen Werkzeug 34 in Form der Schaufel besteht.

Wird die Arbeitsausrüstung angehoben ist es je nach Schüttgut möglich, dass im Bereich des zweiten Scheinwerfers 20, Schüttgut von der Arbeitsausrüstung, insbesondere durch Kippbewegung in den Bereich des Scheinwerfers fällt. Darum kann der Scheinwerfer selbst durch Abdeckung geschützt oder eine übergeordnete Abdeckung angebracht werden, um Beschädigungen des Scheinwerfers zu verhindern (nicht dargestellt).

Um eine Beschädigung des Scheinwerfers auch durch im Fahrbetrieb aufgewirbelte Steine oder dergleichen zu schützen, kann des Weiteren ein Schutzblech oder dergleichen vorgesehen sein, das den Scheinwerfer entsprechend schützt.

Des Weiteren ist eine nicht näher dargestellte Steuereinheit vorgesehen, die über eine oder mehrere Sensoren die Position der Arbeitsausrüstung 30 erfasst.

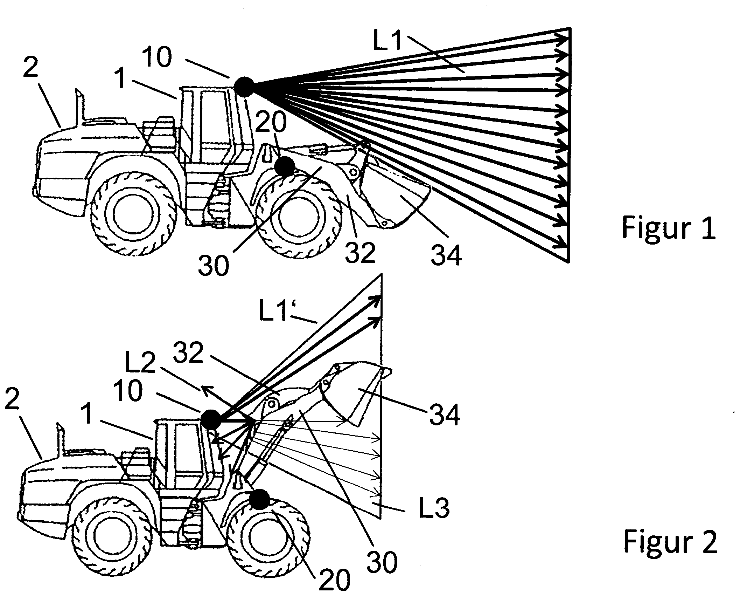

Befindet sich die Arbeitsausrüstung 30 in einer unteren Position gemäß Figur 1, wird dies durch den oder die Sensoren erfasst. Die Steuereinheit wertet dieses Signal des oder der Sensoren aus und steuert den oder die oberen Scheinwerfer 10 mit einer höheren Intensität an als den unteren Scheinwerfer 20. Dieser wird mit einer geringeren Intensität als der obere Scheinwerfer 10 betrieben, was auch den Fall einschließt, dass dieser ganz ausgeschaltet wird. Durch diese Maßnahme wird erreicht, dass eine Blendwirkung des Maschinenführers ausgeschlossen wird, da sich in dem Lichtkegel L1 des oberen Scheinwerfers 10 kein zur Blendung des Maschinenführers geeignetes Teil, und insbesondere nicht die Arbeitsausrüstung selbst befindet.

Figur 2 zeigt einen Radlader gemäß Figur 1 mit angehobener Arbeitsausrüstung. Wird die Beleuchtung weiterhin wie in Figur 1 durch den ersten Scheinwerfer 10 vorgenommen, führt dies dazu, dass Licht, das von dem ersten Scheinwerfer 10 ausgeht, teilweise an der Arbeitsausrüstung bzw. an dem Hubgerüst 32 und/oder an dem Werkzeug 34 reflektiert wird, so dass reflektierte Lichtstrahlen L2 entstehen, die den Fahrer blenden können.

Mit dem Bezugszeichen L1' sind Lichtstrahlen gekennzeichnet, die ausgehend von dem ersten Scheinwerfer 10 an der Arbeitsausrüstung vorbei verlaufen und mit dem Bezugszeichen L3 sind Lichtstrahlen geringerer Intensität gekennzeichnet, die ebenfalls von dem ersten Scheinwerfer 10 ausgehen und deren Intensität - symbolisiert durch die schwächeren Pfeile - aufgrund der Behinderung durch das Hubgerüst 32 verringert ist.

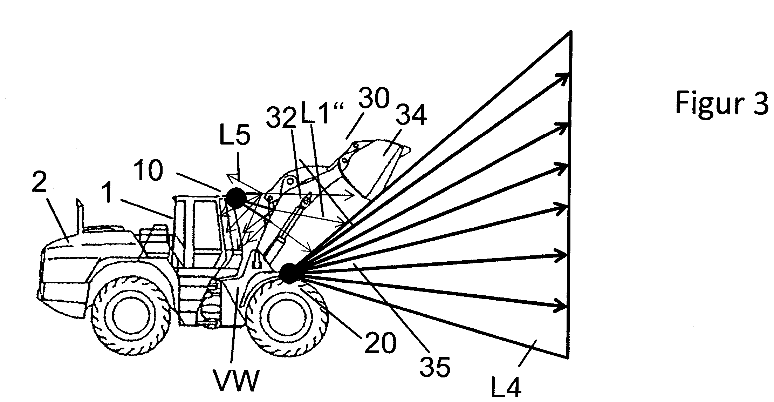

Um diese Blendwirkung gemäß der Lichtstrahlen L2 zu verhindern bzw. so gering wie möglich zu halten, wird folgende Vorgehensweise vorgesehen:
Wird im Betrieb die Arbeitsausrüstung 30 nach oben bewegt, wie dies aus Figur 3 hervorgeht, wird dies von einem oder mehreren Sensoren erfasst und an die Steuereinheit gemeldet. Diese steuert nun den den Lichtkegel L4 erzeugenden unteren Scheinwerfer 20 mit einer höheren durch die dickeren Pfeile symbolisierten Intensität an als den oberen Scheinwerfer 10, der entweder ganz ausgeschaltet wird oder mit einer geringen Intensität betrieben wird, wie dies aus Figur 3 durch den kleineren Lichtkegel L1" angedeutet ist. Zwar trifft der Lichtkegel L1" des oberen Scheinwerfers 10 gemäß Figur 3 auf die Arbeitsausrüstung 30, jedoch wird aufgrund der geringeren Lichtleistung eine Blendwirkung bzw. ein störender Schattenwurf verhindert.

Aufgrund der geringeren Intensität der Beleuchtung durch den ersten Scheinwerfer 10 ist das abgegebene Licht L1" von geringerer Intensität - symbolisiert durch die dünneren Pfeile - als in dem Zustand gemäß Figur 1.

Durch die geringere Lichtleistung des Scheinwerfers 10 kommt es zwar ebenfalls zu einer Reflexion gemäß der Lichtstrahlung L5, diese ist jedoch aufgrund der geringeren Lichtleistung wesentlich kleiner als in dem Zustand gemäß Figur 2.

Von der vorliegenden Erfindung ist auch der Fall umfasst, dass nicht die Lichtleistung der einzelnen Scheinwerfer 10, 20 verändert wird, sondern z. B. vor diese eine oder mehrere Blenden geschoben werden, so dass das von diesem ausgehende Licht abgeschwächt und/oder in seiner Richtung verändert werden kann.

Durch die vorliegende Erfindung ist es möglich, Blendwirkungen und Schattenwürfe, die den in der Führerkabine 1 befindlichen Maschinenführer stören könnten, durch die Arbeitsausrüstung oder durch ein sonstiges Element der Arbeitsmaschine weitgehend oder vollständig zu verhindern.

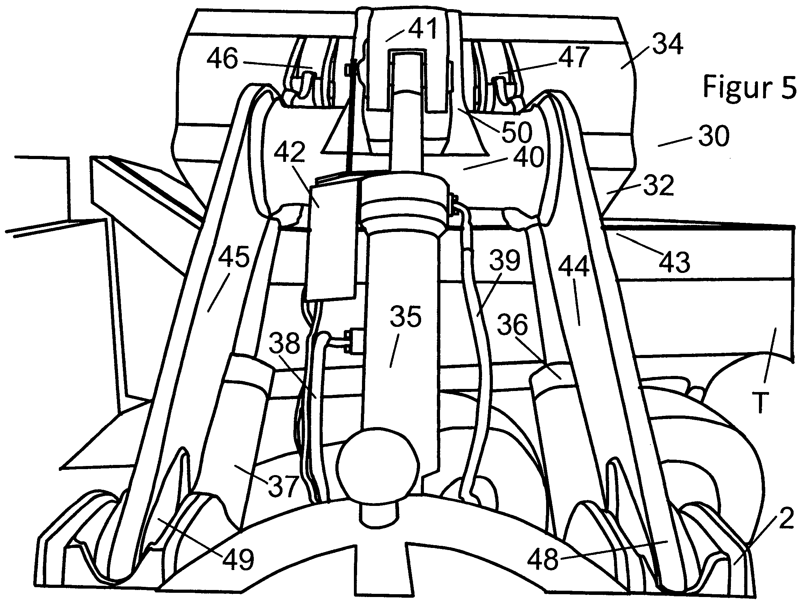

In Figur 3 wird eine schematische Ansicht eines Radladers 2 mit angehobener Arbeitsausrüstung 32 und mit wenigstens zwei in vertikaler Richtung voneinander beabstandeten Scheinwerfern 10, 20 dargestellt. Die oberen Scheinwerfer 10, befinden sich beispielhaft innerhalb oder außerhalb der Kabine 1 in dessen oberen Bereich. Der oder die unteren Scheinwerfer 20 können am oder im Vorderwagen VW nah vorne hin ganz oder teilweise versenkt oder im Bereich der Arbeitsausrüstung 30 zur Ausleuchtung in Richtung des Werkzeugs 34 bzw. der Ladekante (Fig. 5, Pos. 43) angeordnet sein. Beispielhaft kann der Scheinwerfer 20 im Vorderwagen VW versenkt oder außerhalb des Vorderwagens VW in einem separaten Beleuchtungsgehäuse (nicht dargestellt) eingebaut werden.

Ein Ziel ist, dass die Ladekante sowie das Umfeld des Muldenkippers maximal ausgeleuchtet wird.

Die Beleuchtungsintensität innerhalb des Abstrahlwinkel 35 kann durch eine individuelle Streuscheibe beeinflusst werden (nicht dargestellt). Durch die Ausformung der Streuscheibe kann zusätzlich ein spezieller Bereich bspw. im Umfeld der Ladekante mit höherer Lichtintensität beaufschlagt werden.

Eine andere Möglichkeit wäre durch einen Aktuator am Scheinwerfer 20 (nicht dargestellt) den Abstrahlwinkel zu verändern. Diese vertikale Verstellung des Scheinwerfers 20 könnte durch den Maschinenführer manuell über Steuerelemente ausgeführt werden, um auf verändernde Höhen der Ladekante zu reagieren.

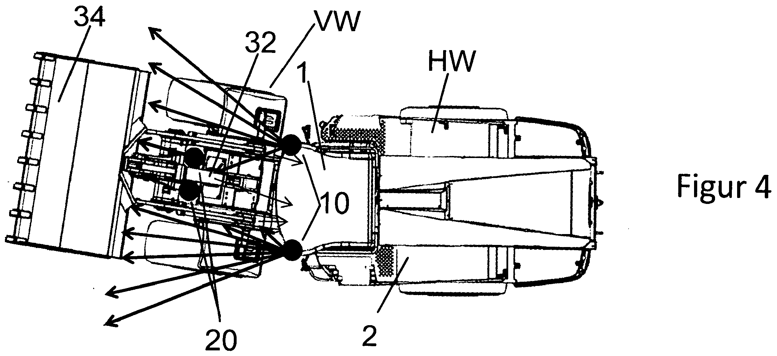

Die Figur 4 zeigt die Draufsicht auf einen Radlader 2 gemäß der Figuren 1 bis 3.

Der Radlader besteht aus einem Hubgerüst 32, einem Werkzeug 34, einem Vorderwagen VW, einen Hinterwagen HW und eine Kabine 1. An der Kabine 1 sind im oberen Bereich zwei seitlich voneinander beabstandete erste Scheinwerfer 10 sowie zwei am Vorderwagen VW oder der Arbeitsausrüstung 30 ebenfalls seitlich voneinander beabstandete zweite Scheinwerfer 20 dargestellt.

Der Radlader 2 ist knickgelenkt und in einer eingelenkten Position dargestellt. Dies wird durch einen abgeknickten Vorderwagen VW deutlich sichtbar. Die Steuerung der Beleuchtung hängt beispielsweise von Lenkwinkel und Arbeitsausrüstungsposition ab. Es wird nur auf den Lenkwinkel eingegangen. Durch die sich am Hinterwagen HW befindliche Kabine 1 bewegt sich bei Lenkeinschlag der Vorderwagen VW relativ dazu. Es können Abschattungen und Blendungen hervorgerufen durch Bauteile der Arbeitsausrüstung 30 hervorgerufen werden, die in der Beleuchtungssteuerung, als spezifische Kennlinie berücksichtigt werden müssen. Nähere Details zu den Bauteilen ergeben sich aus Figur 5. Durch die Erfindung ist es möglich, nun beispielsweise den rechten oder den linken der ersten Scheinwerfer 10 und/oder der zweiten Scheinwerfer 20 in seiner Intensität in Abhängigkeit von dem Knickwinkel so zu verstellen, dass möglichst wenig Schattenwurf und eine möglichst geringe Blendwirkung für den in der Führerkabine 1 befindlichen Führer der Arbeitsmaschine entsteht.

Erfindungsgemäß ist es somit möglich, die Intensität der Beleuchtung nicht nur in Abhängigkeit von der Höhe bzw. Position des Hubgerüstes 32 bzw. der Arbeitsausrüstung 30 einzustellen, sondern auch von dem Knickwinkel einer knickgelenkten Arbeitsmaschine, wie beispielsweise einem Radlader 2.

Die Figur 5 verdeutlicht die Sicht des Maschinenführers auf die Ladekante 43 unter Einbeziehung der Arbeitsausrüstung 30. Die hier gezeigte Arbeitsausrüstung 30 ist beispielhaft eine Z-Kinematik, zu sehen an der charakteristischen Anordnung von Hub- 36, Kippzylinder 35 und Umlenkhebel 41. Das Hubgerüst 32 besteht aus zwei Hubarmen 44, 45 und einem Querrohr 40. Dieses Hubgerüst 32 ist jeweils an der äußeren Hubgerüstlagerung 48, 49 drehbar am Vorderwagen (Fig. 4, Pos. VW) gelagert. Das Arbeitswerkzeug 34 ist an den Schaufellagern 46, 47 mit dem Hubgerüst 32 drehbar verbunden. Das Hubgerüst 32 beinhaltet ein Querrohr 40 auf dem sich mittig ein Auflager 50 für die Anlenkung des Umlenkhebels 41 befindet. Der Kippzylinder 35 ist auf der einen Seite am Vorderwagen VW, auf der anderen Seite am Umlenkhebel 41 befestigt und über eine Verbindungslasche mit dem mittig angeordneten Schaufellager (beide nicht dargestellt) und dem Arbeitswerkzeug 34 verbunden.

Die Figur 5 verdeutlicht, dass in der seitlichen Darstellung der Transportmulde T ohnehin nur eine sehr eingeschränkte Sicht auf diese besteht. Die eingeschränkte Sicht des Fahrers wird unter anderem durch die konstruktive Ausführung von Bauteilen, wie die der Hubzylinder 36, 37, dem Kippzylinder 35, den Hubarmen 44, 45, dem Querrohr 40, den Elektrik- und Hydraulikleitungen 38, 39, dem Schutzblech 42 für die automatische Schaufelrückführung, dem Umlenkhebel 41 und dem Arbeitswerkzeug 34 hervorgerufen. Die Sicht auf die Ladekante 43 (siehe dick gezeichnete, teilweise unterbrochene Linie), die durch die vorher erwähnten Bauteile in bestimmten Hubgerüstpositionen teilweise verdeckt ist, beschränkt in bestimmten Situationen die Sicht des Fahrers auf die Transportmulde T. Es ist ersichtlich, dass die Sicht auf die Ladekante durch betreffende Bauteile schon bei Tag teilweise erschwert ist. Der erfahrene Fahrer muss die Ladekante 43 erkennen, die Höhen und Tiefenverhältnisse zur Transportmulde T richtig einschätzen und den Lade/Entladevorgang ohne Beschädigung an Radlader 2 oder Transportmulde T durchführen.

Kommen zusätzliche Einflussfaktoren wie beispielsweise ein Nacht- oder Untertagebetrieb hinzu sind zusätzliche Schattenwürfe oder Blendeffekte an den Bauteilen zu erwarten. Die zusätzlichen Einflussfaktoren erfordern eine große Routine und bewirken eine schnelle Ermüdung des Fahrers sowie bedingen ein langsameres Be- und Entladen der Transportmulde T. Langsamere Be- und Entladungen durch den Radlader 2 bedingen eine geringere Umschlagsleistung. Eine schnelle Ermüdung führt wiederum dazu, dass der Fahrer öfter im jeweiligen Arbeitszeitraum gewechselt werden muss und/oder dass bei Nichtbeachtung dieser speziellen Einflußfaktoren Schäden auf Grund der Ermüdung des Fahrers passieren können, beispielsweise falsche Einschätzung der Hubgerüsthöhe 32 und/oder Werkzeug-Positionierung 34 gegenüber der Transportmulde T. Dies bewirkt Reparaturkosten und zusätzlichen Wertverlust der Maschinen. In diesem Fall ist es vorteilhaft, die oberen Scheinwerfer 10 abzuschalten oder jedenfalls in ihrer Beleuchtungsintensität zu dimmen und die unten angeordneten Scheinwerfer 20 in ihrer Beleuchtungsintensität zu steigern bzw. überhaupt anzuschalten, um den Arbeitsbereich möglichst gut auszuleuchten.

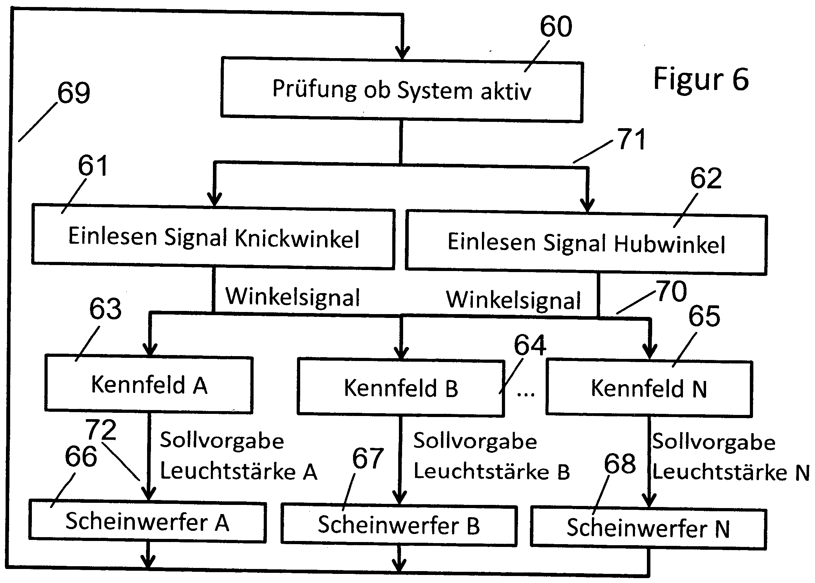

Figur 6 zeigt ein Verfahren zur Steuerung/Regelung einer Beleuchtung. Im Verfahrensschritt 60 wird von der Steuerung/Regelung geprüft, ob das System aktiv ist. Aktives System heißt, dass der Motor, insbesondere Verbrennungsmotor gestartet und das Fahrzeug fahrbereit ist. Aktiv heißt zusätzlich, dass vom Maschinenbediener manuell, beispielsweise über ein Signalelement und/oder automatisiert durch vorliegen definierter analoger oder digitaler Eingangssignale die über mindestens eine bestimmte Zeit mit der jeweiligen Schaltschwellen anliegen, unterschritten, überschritten oder Schaltzustände erreicht sind, die in weiterer Folge beispielhaft aufgezählt werden. Diese Eingangssignale können durch Taster, Schalter oder andere Eingabeelemente wie Dämmerungsschalter, -sensoren, Abstandsensoren, Reflexionssensoren oder andere bauähnliche Elemente oder Sensoren generiert werden.

Der Fahrer kann die speziellen Beleuchtungsmodi "manuell" über mechanische Tasten, Schalter oder über ein Bedien-/Touchpaneel aktivieren oder durch vorgenannte Schaltmöglichkeiten einen "vollautomatischen Modus" einleiten, beispielsweise durch einen zusätzlichen Eingang eines Dämmerungsschalters oder eines ähnlichen Bauteils.

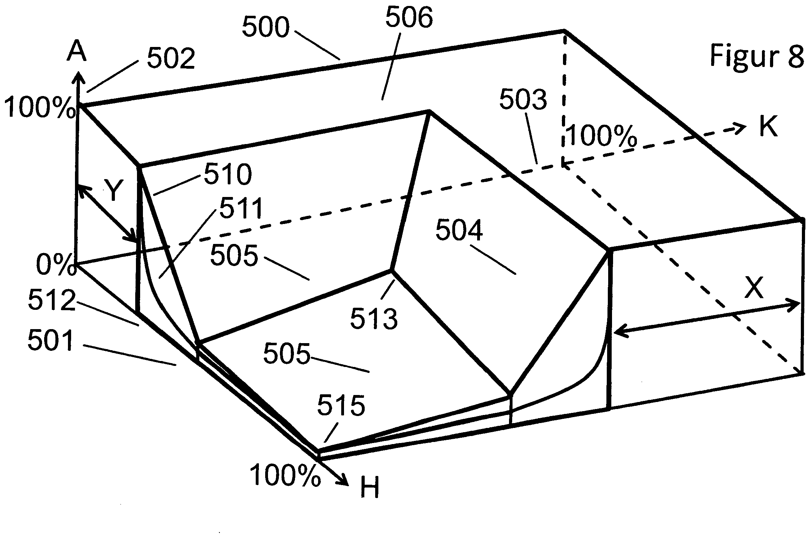

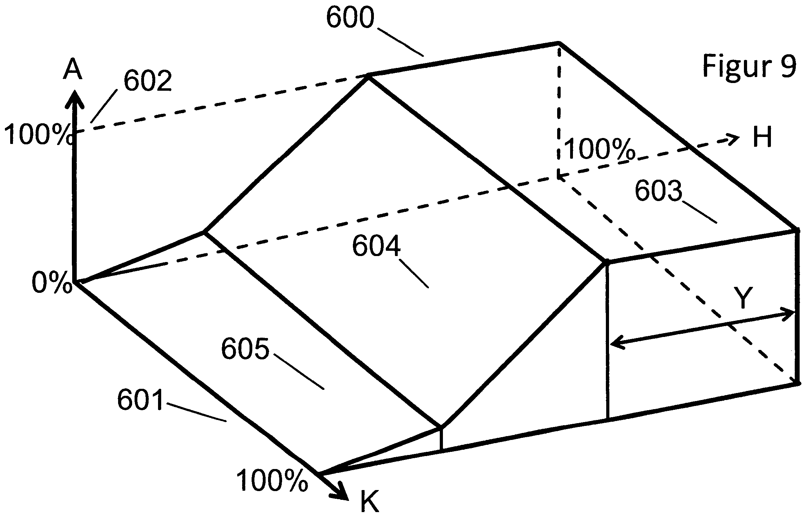

Ist oder sind definierbare vormals beschriebenen Bedingungen erfüllt, wird der Wert des Knickwinkelsensors 61, sowie auch der Wert des Hubwinkelsensors 62 in die Steuerung 71 eingelesen. Zu den jeweiligen Winkelsignalen 70 sind in der Steuerung experimentell festgelegte Kennfelder 63, 64, 65 für jede Scheinwerferposition 66, 67, 68 in einem Speicher (nicht dargestellt) hinterlegt. Beispielhaft wird auf Kennfelder, wie in Figur 8, 9 dargestellt, verwiesen. Aus den Signalen 61 und 62 ergeben sich aus den jeweils hinterlegten Kennfeldern, Sollvorgaben für die Leuchtstärke A sind (Bezugszeichen 72). Diese jeweils den Scheinwerfern 10, 20 zugeordneten Sollwertvorgaben (0-100%) werden direkt oder indirekt den jeweiligen Eingang des Scheinwerfer 10, 20 zugeführt. Dies gilt jeweils für die Scheinwerfer 66, 67 und 68 in beliebiger Anzahl, angedeutet durch Punkte und den jeweiligen Buchstaben N. Die Rückkopplung einer betreffenden Regelung ist mit Bezugszeichen 69 beschrieben.

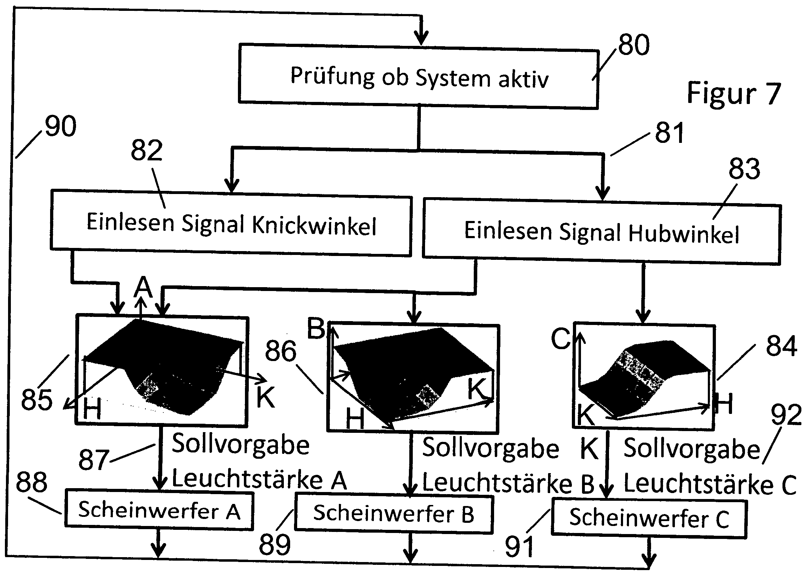

In der Figur 7 wird eine vorteilhafte Ausführung der Steuerung/Regelung von zwei Scheinwerfern 10 und einem Scheinwerfer 20 beschrieben. Diese Scheinwerferkombination ist beispielsweise in der Figur 4, Bezugszeichen 10 im oberen Bereich der Kabine angeordnet, der Scheinwerfer 20 ist im vorderen Bereich des Vorderwagens VW angeordnet.

Die beiden abgebildeten Kennfelder 85, 86 sind stellvertretend für Sollvorgabe der Leuchtstärke A ausgehend von den in Figur 8 beschriebenen Parameter mit Achsenbeschriftungen K, H, A des rechten Scheinwerfers 85 und des linken Scheinwerfers 86. Die jeweiligen Kennfelder ergeben sich aus den Scheinwerferpositionen 10, dem Lenkwinkel und der Position der Arbeitsausrüstung. Der Lenkwinkel bewirkt bei gehobener Arbeitsausrüstung, dass in der Nähe des linken Endanschlags der Lenkung, der linke Scheinwerfer 10 gedimmt wird, sowie im Bereich des rechten Anschlages der Lenkung der rechte Scheinwerfer 10 abgedimmt werden muss.

Die Steuerung (nicht dargestellt) vergleicht die Parameter der jeweiligen Eingänge mit den jeweiligen gespeicherten Tabellenwerten, aus experimentellen Versuchen im Speicher hinterlegt, und gibt den jeweiligen Wert A und B an die betreffenden Beleuchtungsausgänge 88, 89 aus. Die gespeicherten Tabellen weisen den Eingangswerten K, H die jeweiligen Ausgangswerte der Beleuchtungen A und B zu. Diese gespeicherten Tabellen berücksichtigen beispielsweise die geometrischen Verhältnisse aus Fahrzeugtype, -geometrie, beispielsweise Kabinentyp mit Abständen und Winkel der Beleuchtung 10, die Anordnung des Scheinwerfers 20, die Anordnung der Beleuchtungseinrichtung, Lenkwinkel, Wert des Hubzylindersensors, Kippzylindersensors, Schaufelart (Erdbewegerschaufel, Leichtgutschaufel, Hochkippschaufel), Hubgerüstspezifizierung (Z-Kinematik, P-Kinematik oder Kombinationen daraus) und andere fahrersichtbeeinflussende Parameter wie beispielsweise Schutzbleche für Meßsensoren (Fig. 5, Pos. 42). Aus diesen Parametern werden spezifisch für den jeweiligen Radlader mit der jeweiligen Arbeitsausrüstung 30 die in der Steuerung hinterlegten Ausgangspegel A oder B den Beleuchtungsausgänge die wiederum direkt oder indirekt die Scheinwerfer 10 ansteuern.

Zur Anordnung der Scheinwerfer 20, d.h. des Scheinwerfers C wird auf den Beschreibungstext der Figur 4 verwiesen. Der Unterschied zu vorher beschriebenen Kennlinien 85, 86 ist, dass als Eingangswert nur der Hubwinkel H eingeht sowie der Wert C für die Beleuchtungsintensität ausgegeben wird.

In Figur 8 dargestellt ist eine Ansicht einer vorteilhaften Ausführung eines Kennfeldes zur Beleuchtungssteuerung beispielhaft für die Ansteuerung des Scheinwerfers 10 an der Kabine 1. Das Kennfeld 500 besteht aus drei Achsen, mit positivem Vorzeichen in Richtung 501, 502, 503, dargestellt. Die Achse 501 mit der Abkürzung K zeigt den Knickwinkel (0% linker Anschlag, 100% rechter Anschlag). Die Achse 503 mit dem Bezugszeichen H, bezeichnet den Hubwinkel (0% unten, 100% oben). Den Werten aus 501 und 503 werden über im Speicher der Steuerung hinterlegte Kennwerte der Wert für 502 zugewiesen. Diese Sollwertvorgaben dienen zur direkten oder indirekten Ansteuerung, beispielsweise über Meßverstärker des Scheinwerfers 10. Dieses beispielhaft dargestellte Kennfeld 500, zeigt ein experimentell ermitteltes Kennfeld für die jeweilige Scheinwerferansteuerung exemplarisch des linken Scheinwerfers 10, das einen annähernd stufenförmigen Verlauf aufweist. Bei abgesenkter Hubausrüstung 32 und in der Nähe des rechten Anschlages des Lenkwinkels wird der Sollwert der Scheinwerfereinganges auf 100% gesetzt, d.h. volle Leuchtstärke des Scheinwerfers 10. In dem L-förmigen Bereich 506 liegt keine Abschattung vor, daher liegt die Beleuchtungsintensität bei 100 %. Dieser L-förmige Bereich 506 ist durch die Abschnitte X und Y charakterisiert, die je nach Ausführungsform der betreffenden Ausrüstung variiert. Anschließend an den L-förmigen Bereich 506 erfolgt eine starke Reduzierung der Leuchtkraft an den linearisierten Flächen 504, 505, siehe auch Figur 7, Pos. 85, 86. Diese Leuchtkraftreduzierung kann durch Dimmung oder durch Kombination durch Zu- und Abschaltung mehrerer Scheinwerfer 10 erfolgen. Diese Reduzierung der Leuchtkraft der betreffenden Scheinwerfer 10 resultiert daraus, dass die betreffenden Bauteile bei minimaler Variierung von Hub- und Knickwinkel eine unvorteilhafte Blendung/Abschattung 504, 505 hervorrufen. In diesem Bereich erfolgt eine rasche Abnahme des Wertes A. Die Abnahme des Signals kann treppenförmig 512, annähernd linear 511, gekrümmt 510 oder eine Kombinationen aus diesen vorher ausgeführten Formen sein. Vorzugsweise wird aber angedacht, keine abrupten Leuchtstärkenänderungen durchzuführen, weil diese für das Auge des Maschinenführers als unangenehm empfunden wird. Der weitere Bereich 505 verläuft abfallend vom Punkt 513, beispielhaft als schiefe Ebene, abfallend in Richtung des Endpunktes K 100%, H 0%, A 5% mit Bezugszeichen 515. Dieses annähernd rechteckige Feld 505, kann jedoch in jedem Bereich der Ebene bzw. schiefen Ebene oder am Endpunkt auf A=0 gesetzt, also die Beleuchtung ausgeschaltet werden.

In Figur 9 dargestellt ist eine Ansicht einer vorteilhaften Ausführung eines Kennfeldes zur Beleuchtungssteuerung, beispielhaft am Vorderwagen VW bzw. an der Arbeitsausrüstung 30. Das Kennfeld 600 ist beispielhaft mit drei Achsen, mit positivem Vorzeichen in Richtung 601, 602, 603, dargestellt. Die Achse 603 mit dem Bezugszeichen H, bezeichnet den Hubwinkel (0% unten, 100% oben). Die Achse 601 mit der Abkürzung K zeigt den Knickwinkel (0% linker Anschlag, 100% rechter Anschlag). Der Wert von A ist für einen bestimmten Hubwinkel H über den gesamten Knickwinkel K 0-100% als konstant anzusehen. Den Werten von 603 werden über im Speicher der Steuerung hinterlegte Kennwerte Werte von 602 zugewiesen. Diese Sollwertvorgaben aus 602 sind proportional der Leuchtstärke der jeweiligen Scheinwerfer 20. Dieses beispielhaft dargestellte Kennfeld 600, zeigt ein experimentell ermitteltes Kennfeld für die jeweilige Scheinwerferansteuerung der Scheinwerfer 20, das einen annähernd stufenförmigen Verlauf aufweist. Der Wert von A steigt im ersten Flächenabschnitt 605 als schiefe Ebene von annähernd Wert 0 moderat an und rührt beispielsweise durch Blendeffekte dem Arbeitswerkzeug 34 oder anderen Bauteilen. In einem weiteren Abschnitt 604 steigt die schiefe Ebene steil an. Dieser Helligkeitsanstieg des Scheinwerfers 20 bewirkt eine verbesserte Ausleuchtung im Bereich der Ladekante. Die Ebene 603 wird mit maximaler Leuchtstärke des Scheinwerfers 20 betrieben. Dieser Bereich Y charakterisiert, jenen Hubwinkelbereich mit 100% Leuchtstärke, abgängig von diesem Bereich 604, 605 erfolgt eine Beleuchtungsstärkenreduzierung. Diese ist variabel und abhängig von Positionierung von Scheinwerfer 20 und von der Art der Arbeitsausrüstung. Die Ausführungsform der jeweiligen Abschnitte ist nicht auf die Form einer Ebene (schiefen Ebene) begrenzt, es wird hierzu auf die Ausführungen in der Figur 8 verwiesen. Diese Leuchtkraftreduzierung kann durch Dimmung oder durch Kombination durch Zu- und Abschaltung mehrerer Scheinwerfer 20 erfolgen.

## Patentansprüche

1. Arbeitsmaschine mit wenigstens einer beweglich angeordneten Arbeitsausrüstung (30) und mit mehren Beleuchtungsmitteln zur Beleuchtung des Arbeitsbereiches der Arbeitsausrüstung (30), wobei die Arbeitsmaschine wenigstens eine Steuereinheit sowie wenigstens eine Erfassungseinheit zur Erfassung der Position wenigstens eines Teils von wenigstens zwei relativ zueinander beweglichen Teilen der Arbeitsmaschine und/oder zur Erfassung des Lenkwinkels der Arbeitsmaschine aufweist, wobei die Steuereinheit derart mit der Erfassungseinheit in Verbindung steht, dass von der Erfassungseinheit erfaßte Positionsdaten an die Steuereinheit übermittelt werden, **dadurch gekennzeichnet, dass** die Steuereinheit mit den Beleuchtungsmitteln derart in Verbindung steht und derart ausgebildet ist, dass die Steuereinheit in Abhängigkeit der von den Erfassungsmitteln erhaltenen Positionsdaten die Beleuchtungsintensität der durch die Beleuchtungsmittel in wenigstens einer Richtung abgegebenen Beleuchtung derart durch Dimmen einstellt, dass sie Beleuchtungsmittel, in deren Beleuchtungsrichtung sich das genannte Teil von wenigstens zwei relativ zueinander beweglichen Teilen der Arbeitsmaschine befindet, mit einer geringeren Beleuchtungsintensität betreibt, als Beleuchtungsmittel, in deren Beleuchtungsrichtung sich das genannte Teil nicht befindet, wobei die Beleuchtungsmittel stufenlos oder abgestuft dimmbar sind.

2. Arbeitsmaschine nach Anspruch 1, **dadurch gekennzeichnet, dass** es sich bei dem Teil von wenigstens zwei relativ zueinander beweglichen Teilen der Arbeitsmaschine um die Arbeitsausrüstung (30) oder einen Teil von dieser handelt.

3. Arbeitsmaschine nach Anspruch 1 oder 2, **dadurch gekennzeichnet, dass** es sich bei dem Teil von wenigstens zwei relativ zueinander beweglichen Teilen der Arbeitsmaschine um ein Teil einer knickgelenkten Arbeitsmaschine handelt, das durch die Knicklenkung relativ zu einem anderen Teil der Arbeitsmaschine bewegbar ist.

4. Arbeitsmaschine nach einem der vorhergehenden Ansprüche, **dadurch gekennzeichnet, dass** die Beleuchtungsmittel voneinander beabstandet angeordnet sind.

5. Arbeitsmaschine nach einem der vorhergehenden Ansprüche, **dadurch gekennzeichnet, dass** die Steuereinheit derart ausgebildet ist, dass die Beleuchtungsintensität der durch die Beleuchtungsmittel in wenigstens einer Richtung abgegebenen Beleuchtung durch Veränderung der Lichtleistung und durch eine Bewegung der Beleuchtungsmittel einstellbar ist.

6. Arbeitsmaschine nach einem der vorhergehenden Ansprüche, **dadurch gekennzeichnet, dass** die Beleuchtungsmittel ein- und ausschaltbar sind und/oder dass die Beleuchtungsmittel nicht bewegbar ausgeführt sind.

7. Arbeitsmaschine nach einem der vorhergehenden Ansprüche, **dadurch gekennzeichnet, dass** das genannte Teil von wenigstens zwei relativ zueinander beweglichen Teilen der Arbeitsmaschine derart ausgebildet ist, dass es insgesamt oder teilweise auf- und ab bewegbar ist und/oder in seitlicher Richtung bewegbar ist.

8. Arbeitsmaschine nach einem der vorhergehenden Ansprüche, **dadurch gekennzeichnet, dass** wenigstens zwei Beleuchtungsmittel der Arbeitsmaschine in vertikaler Richtung voneinander beabstandet sind und/oder dass wenigstens zwei Beleuchtungsmittel der Arbeitsmaschine in horizontaler Richtung voneinander beabstandet sind.

9. Arbeitsmaschine nach einem der vorhergehenden Ansprüche, **dadurch gekennzeichnet, dass** es sich bei der Arbeitsausrüstung um das Hubgerüst (32), einen Frontlader, einen Ausleger oder einen Kranarm oder einen Teil der vorgenannten Elemente handelt und/oder dass es sich bei der Arbeitsmaschine um einen Radlader (2), Stapler, Bagger, Traktor, Kran, Lader oder Materialumschlagsgerät handelt.

10. Arbeitsmaschine nach einem der vorhergehenden Ansprüche, **dadurch gekennzeichnet, dass** Mittel zur Erfassung der Art der Arbeitsausrüstung vorgesehen sind und dass die Steuereinheit derart ausgebildet ist, dass die Ansteuerung der Beleuchtungsmittel in Abhängigkeit von der Art der Arbeitsausrüstung (30) vorgenommen wird.

11. Arbeitsmaschine nach einem der vorhergehenden Ansprüche, **dadurch gekennzeichnet, dass** die Erfassungseinheit zur Erfassung der Position wenigstens eines Teils von wenigstens zwei relativ zueinander beweglichen Teilen der Arbeitsmaschine und/oder zur Erfassung des Lenkwinkels der Arbeitsmaschine mit wenigstens einem Speicher in Verbindung steht, in dem wenigstens ein Kennfeld (85, 86) oder wenigstens eine Tabelle gespeichert ist, in dem/der die Abhängigkeit der Beleuchtungsintensität von einem oder von mehreren durch die Erfassungseinheit erfassten Parametern wiedergegeben ist und dass Mittel vorgesehen sind, durch die die anhand des Kennfeldes oder der Tabelle ermittelte Beleuchtungsintensität ausgegeben wird.

12. Arbeitsmaschine nach Anspruch 11, **dadurch gekennzeichnet, dass** es sich bei dem oder den Parametern um den Knickwinkel und/oder um den Hubwinkel der Arbeitsausrüstung (30) insbesondere eines Radladers (2) handelt.

13. Arbeitsmaschine nach Anspruch 11 oder 12, **dadurch gekennzeichnet, dass** mehrere Scheinwerfer (10, 20, 66, 67, 68) vorgesehen sind und dass die Kennfelder (85, 86) oder Tabellen und/oder die Art und/oder die Anzahl der Parameter für die mehreren Scheinwerfer (10, 20, 66, 67, 68) unterschiedlich sind.

14. Verfahren zum Betrieb einer Arbeitsmaschine nach einem der Ansprüche 1 bis 13, **dadurch gekennzeichnet, dass** in Abhängigkeit der von den Erfassungsmitteln erhaltenen Positionsdaten die Beleuchtungsintensität der durch die Beleuchtungsmittel in wenigstens einer Richtung abgegebenen Beleuchtung derart durch Dimmen eingestellt wird, dass Beleuchtungsmittel, in deren Beleuchtungsrichtung sich das genannte Teil von wenigstens zwei relativ zueinander beweglichen Teilen der Arbeitsmaschine befindet, mit einer geringeren Beleuchtungsintensität betrieben werden, als Beleuchtungsmittel, in deren Beleuchtungsrichtung sich das Teil nicht befindet, wobei die Beleuchtungsmittel stufenlos oder abgestuft gedimmt werden.

15. Verfahren nach Anspruch 14, **dadurch gekennzeichnet, dass** zur Ermittlung der Beleuchtungsintensität wenigstens ein Kennfeld (85, 86) oder wenigstens eine Tabelle verwendet wird, in dem/der die Beleuchtungsintensität in Abhängigkeit wenigstens eines gemessenen Parameters, insbesondere in Abhängigkeit des Knickwinkels und/oder des Hubwinkels der Arbeitsausrüstung (30) insbesondere eines Radladers (2) abgespeichert ist.

## Claims

1. Work machine comprising at least one movably arranged item of work equipment (30) and a plurality of illumination means for illuminating the working area of the work equipment (30), wherein the work machine has at least one control unit and at least one detection unit for detecting the position of at least one part of at least two parts of the work machine that are movable relative to one another and/or for detecting the steering angle of the work machine, wherein the control unit is connected to the detection unit in such a way that position data detected by the detection unit are transferred to the control unit, **characterised in that** the control unit is connected to the illumination means in such a way and is designed in such a way that, depending on the position data received from the detection means, the control unit adjusts the illumination intensity of the illumination emitted by the illumination means in at least one direction by dimming, such that it operates illumination means in the illumination direction of which said part of at least two parts of the work machine that are movable relative to one another is located with a lower illumination intensity than illumination means in the illumination direction of which said part is not located, the illumination means being dimmable in a continuous or stepped manner.

2. Work machine according to claim 1, **characterised in that** the part of at least two parts of the work machine that are movable relative to one another is the work equipment (30) or a part thereof.

3. Work machine according to claim 1 or 2, **characterised in that** the part of at least two parts of the work machine that are movable relative to one another is a part of an articulated work machine which is movable relative to another part of the work machine by means of the articulated steering system.

4. Work machine according to one of the preceding claims, **characterised in that** the illumination means are spaced apart from one another.

5. Work machine according to one of the preceding claims, **characterised in that** the control unit is designed in such a way that the illumination intensity of the illumination emitted by the illumination means in at least one direction can be adjusted by changing the light output and by moving the illumination means.

6. Work machine according to one of the preceding claims, **characterised in that** the illumination means can be switched on and off and/or that the illumination means are not designed to be movable.

7. Work machine according to one of the preceding claims, **characterised in that** said part of at least two parts of the work machine that are movable relative to one another is designed in such a way that all or part of it can be moved up and down and/or can be moved in a lateral direction.

8. Work machine according to one of the preceding claims, **characterised in that** at least two illumination means of the work machine are spaced apart from one another in the vertical direction and/or that at least two illumination means of the work machine are spaced apart from one another in the horizontal direction.

9. Work machine according to one of the preceding claims, **characterised in that** the work equipment can be the mast (32), a front loader, a boom or a crane arm or a part of the aforementioned elements and/or that the work machine can be a wheel loader (2), lift truck, excavator, tractor, crane, loader or material handling device.

10. Work machine according to one of the preceding claims, **characterised in that** means for detecting the type of work equipment are provided and that the control unit is designed in such a way that the illumination means are controlled depending on the type of work equipment (30).

11. Work machine according to one of the preceding claims, **characterised in that** the detection unit for detecting the position of at least one part of at least two parts of the work machine that are movable relative to one another and/or for detecting the steering angle of the work machine is connected to at least one memory in which is stored at least one characteristic diagram (85, 86) or at least one table, in which the dependency of the illumination intensity on one or more parameters detected by the detection unit is reproduced, and that means are provided with which the illumination intensity determined from the characteristic diagram or the table is output.

12. Work machine according to claim 11, **characterised in that** the parameter(s) is/are the articulation angle and/or the lifting angle of the work equipment (30), in particular of a wheel loader (2).

13. Work machine according to claim 11 or 12, **characterised in that** a plurality of headlamps (10, 20, 66, 67, 68) are provided and that the characteristic diagrams (85, 86) or tables and/or the type and/or the number of parameters for the plurality of headlamps (10, 20, 66, 67, 68) are different.

14. Method for operating a work machine according to one of claims 1 to 13, **characterised in that**, depending on the position data received from the detection means, the illumination intensity of the illumination emitted by the illumination means in at least one direction is adjusted by dimming, such that illumination means in the illumination direction of which said part of at least two parts of the work machine that are movable relative to one another is located are operated with a lower illumination intensity than illumination means in the illumination direction of which the part is not located, the illumination means being dimmed in a continuous or stepped manner.

15. Method according to claim 14, **characterised in that** in order to determine the illumination intensity, at least one characteristic diagram (85, 86) or at least one table is used, in which is stored the illumination intensity depending on at least one measured parameter, in particular depending on the articulation angle and/or the lifting angle of the work equipment (30), in particular of a wheel loader (2).

## Revendications

1. Machine de travail comprenant au moins un équipement de travail (30) agencé de manière mobile et comprenant plusieurs moyens d'éclairage pour éclairer la zone de travail de l'équipement de travail (30), la machine de travail présentant au moins une unité de commande ainsi qu'au moins une unité de détection pour détecter la position d'au moins une partie parmi au moins deux parties de la machine de travail mobiles l'une par rapport à l'autre et/ou pour détecter l'angle de direction de la machine de travail, l'unité de commande étant reliée à l'unité de détection de telle sorte que des données de position détectées par l'unité de détection sont transmises à l'unité de commande, **caractérisée en ce que** l'unité de commande est reliée aux moyens d'éclairage et est configurée de telle sorte que l'unité de commande, en fonction des données de position obtenues par les moyens de détection, règle l'intensité d'éclairage de l'éclairage émis par les moyens d'éclairage dans au moins une direction par variation, de telle sorte qu'elle fait fonctionner les moyens d'éclairage dans la direction d'éclairage desquels se trouve ladite partie parmi au moins deux parties de la machine de travail mobiles l'une par rapport à l'autre avec une intensité d'éclairage plus faible que les moyens d'éclairage dans la direction desquels ladite partie ne se trouve pas, les moyens d'éclairage pouvant être variés en continu ou par paliers.

2. Machine de travail selon la revendication 1, **caractérisée en ce que** la partie parmi au moins deux parties de la machine de travail mobiles l'une par rapport à l'autre consiste en l'équipement de travail (30) ou une partie de celui-ci.

3. Machine de travail selon la revendication 1 ou 2, **caractérisée en ce que** la partie parmi au moins deux parties de la machine de travail mobiles l'une par rapport à l'autre consiste en une partie d'une machine de travail articulée qui peut être déplacée par rapport à une autre partie de la machine de travail grâce à l'articulation.

4. Machine de travail selon l'une quelconque des revendications précédentes, **caractérisée en ce que** les moyens d'éclairage sont agencés espacés les uns des autres.

5. Machine de travail selon l'une quelconque des revendications précédentes, **caractérisée en ce que** l'unité de commande est configurée de telle sorte que l'intensité d'éclairage de l'éclairage émis par les moyens d'éclairage dans au moins une direction peut être réglée par modification de la puissance lumineuse et par un déplacement des moyens d'éclairage.

6. Machine de travail selon l'une quelconque des revendications précédentes, **caractérisée en ce que** les moyens d'éclairage peuvent être allumés et éteints et/ou **en ce que** les moyens d'éclairage ne sont pas réalisés pour pouvoir être déplacés.

7. Machine de travail selon l'une quelconque des revendications précédentes, **caractérisée en ce que** ladite partie parmi au moins deux parties de la machine de travail mobiles l'une par rapport à l'autre est configurée de telle sorte qu'elle peut être déplacée vers le haut et vers le bas en totalité ou en partie et/ou qu'elle peut être déplacée en direction latérale.

8. Machine de travail selon l'une quelconque des revendications précédentes, **caractérisée en ce qu'**au moins deux moyens d'éclairage de la machine de travail sont espacés l'un de l'autre dans la direction verticale et/ou **en ce qu'**au moins deux moyens d'éclairage de la machine de travail sont espacés l'un de l'autre dans la direction horizontale.

9. Machine de travail selon l'une quelconque des revendications précédentes, **caractérisée en ce que** l'équipement de travail consiste en le cadre de levage (32), un chargeur frontal, une flèche ou un bras de grue ou une partie des éléments susmentionnés et/ou **en ce que** la machine de travail consiste en un chargeur sur roues (2), un chariot élévateur, un excavateur, un tracteur, une grue, un chargeur ou un appareil de transbordement de matériau.

10. Machine de travail selon l'une quelconque des revendications précédentes, **caractérisée en ce que** des moyens sont prévus pour détecter le type d'équipement de travail et **en ce que** l'unité de commande est configurée de telle sorte que la commande des moyens d'éclairage est effectuée en fonction du type d'équipement de travail (30).

11. Machine de travail selon l'une quelconque des revendications précédentes, **caractérisée en ce que** l'unité de détection pour détecter la position d'au moins une partie parmi au moins deux parties de la machine de travail mobiles l'une par rapport à l'autre et/ou pour détecter l'angle de direction de la machine de travail est reliée à au moins une mémoire, dans laquelle est enregistré au moins un diagramme caractéristique (85, 86) ou au moins un tableau dans lequel est représentée la dépendance de l'intensité d'éclairage par rapport à un ou plusieurs paramètres détectés par l'unité de détection, et **en ce que** des moyens sont prévus par lesquels l'intensité d'éclairage déterminée à l'aide du diagramme caractéristique ou du tableau est émise.

12. Machine de travail selon la revendication 11, **caractérisée en ce que** le ou les paramètres consistent en l'angle d'articulation et/ou l'angle de levage de l'équipement de travail (30), notamment d'un chargeur sur roues (2).

13. Machine de travail selon la revendication 11 ou 12, **caractérisée en ce que** plusieurs projecteurs (10, 20, 66, 67, 68) sont prévus et **en ce que** les diagrammes caractéristiques (85, 86) ou les tableaux et/ou le type et/ou le nombre de paramètres sont différents pour les plusieurs projecteurs (10, 20, 66, 67, 68).

14. Procédé pour faire fonctionner une machine de travail selon l'une quelconque des revendications 1 à 13, **caractérisé en ce que**, en fonction des données de position obtenues par les moyens de détection, l'intensité d'éclairage de l'éclairage émis par les moyens d'éclairage dans au moins une direction est réglée par variation, de telle sorte que les moyens d'éclairage dans la direction d'éclairage desquels se trouve ladite partie parmi au moins deux parties de la machine de travail mobiles l'une par rapport à l'autre fonctionnent avec une intensité d'éclairage plus faible que les moyens d'éclairage dans la direction d'éclairage desquels la partie ne se trouve pas, les moyens d'éclairage étant variés en continu ou par paliers.

15. Procédé selon la revendication 14, **caractérisé en ce que**, pour déterminer l'intensité d'éclairage, au moins un diagramme caractéristique (85, 86) ou au moins un tableau est utilisé, dans lequel l'intensité d'éclairage est enregistrée en fonction d'au moins un paramètre mesuré, notamment en fonction de l'angle d'articulation et/ou de l'angle de levage de l'équipement de travail (30), notamment d'un chargeur sur roues (2).
